# EUROPEAN PATENT SPECIFICATION

(11) **EP 2 749 971 B1**
(45) Date of publication and mention of the grant of the patent: **26.04.2017**
(21) Application number: 13199362.8
(22) Date of filing: 23.12.2013
(51) Int. Cl.: G05B 19/042, G05B 23/02, F16K 37/00

(54) **Safety instrument system and method for permitting PST**
Sicherheitsinstrumentensystem und Genehmigungsverfahren für einen PST
Système d'instrument de sécurité et procédé d'autorisation de lancement d'un PST

(30) Priority: 26.12.2012 JP 2012282324
(43) Date of publication of application: 02.07.2014
(73) Proprietor: Azbil Corporation, Chiyoda-ku Tokyo 100-6419 (JP)
(72) Inventor: Otsuka, Kenji, Tokyo 100-6419 (JP)
(74) Representative: Lavoix

(56) References cited:
- US-A1- 2002 108 436
- US-A1- 2008 314 170
- US-A1- 2012 042 721

## Description

The present invention relates to a safety instrument system for preserving safety in a plant, and to a PST initiating method.

There are increasing demands for safety instrument systems (hereinafter termed "SIS") for protecting safety in a plant. In an SIS, and emergency cutoff valve is provided so as to ensure safety by cutting off using the emergency cutoff valve when a failure occurs in the plant. Under normal conditions, the emergency cutoff valve is held in the fully open state, and thus even if the emergency cutoff valve were to become stuck, so as to be in a state that could not function at the time of an emergency, it would be difficult to detect the emergency cutoff valve being stuck.

In order to detect such a fault, periodically a full-closure test of the emergency cutoff valve is performed off-line. The full-closure test must be performed at the time of a periodic inspection when the plant is shut down, and thus is costly. A partial stroke test (PST) is a test that checks the initial motion of the emergency cutoff valve by causing it to move just slightly, while the plant is operating, rather than fully closing the emergency cutoff valve. The time between full-closure tests can be extended through PSTs, thus reducing the preventive maintenance expense (see, for example NISHIDA, June: "Newest Trends in Safety Instrument Systems: PST Solutions and General Solutions," Instrumentation 2006, Volume 49, No. 11, Kogyogijutsusha, 2006).

A safety instrument is controlled through PFD (Probability of Failure on Demand). The effect of the PST is that it is possible to extend the time between full-closure tests without changing the average value of the PFD between full-closure tests of the emergency cutoff valve. In order to keep the average value of the PFD to a planned value, it is necessary to perform the PSTs following a plan that is scheduled in advance. On the other hand, it is necessary to perform the PST while visually confirming the action of the emergency cutoff valve in the plant. In the technology described in Japanese Patent 4121378, a method is proposed for initiating a PST from the plant floor through a switch, or the like. Also known is a safety instrument system for testing of a partial stroke from US 2008/0314170 A1, US 2012/0042721 A1 and US 2002/0108436 A1.

### Summary of the Invention

### [Problem Solved by the Present Invention]

In the conventional technology disclosed in Japanese Patent 4121378, even PSTs that can be considered to not actually be necessary may be initiated through an operation on the plant floor. If the frequency with which PSTs are initiated is increased too much, then the adverse effect on the state of production of the product that is produced in the plant may reach a point where it cannot be ignored.

The present invention was created to solve the problems set forth above, and the object thereof is to provide a safety instrument system and a PST initiating method able to suppress the adverse effect on the plant caused by unnecessary PST initiation.

A safety instrument system according to the present invention comprises: a positioner for controlling the degree of opening of an emergency cutoff valve that is provided in a pipe in a plant; and a higher-level system for controlling a PST of the emergency cutoff valve, wherein: the positioner comprises: PST executing portion for executing a PST in the emergency cutoff valve in response to an initiating instruction from the higher-level system or an initiating instruction from an inputting device in the workplace wherein the positioner is provided; a timer for measuring elapsed time from the completion of a PST on the emergency cutoff valve; and PST initiation prohibition evaluating portion for evaluating whether or not a PST initiation is permitted, by comparing elapsed time from the previous PST, to a PST minimum interval that is set in advance, when a PST initiating instruction has been received from the higher-level system or from the inputting device.

A safety instrument system according to the present invention comprises: a positioner for controlling the degree of opening of an emergency cutoff valve that is provided in a pipe in a plant; and a higher-level system for controlling a PST of the emergency cutoff valve, wherein: the positioner comprises: a querying portion for querying the higher-level system as to whether or not PST initiation is permitted, when a PST initiating instruction has been received from the inputting device in the work area where in the positioner is provided; a PST executing portion for executing a PST in the emergency cutoff valve in response to an initiating instruction from the higher-level system and for executing a PST in the emergency cutoff valve through an initiating instruction from an inputting device in response to a PST initiation permitted/prohibited report from the higher-level system; and a reporting portion for reporting the completion of a PST to the higher-level system, wherein: the higher-level system comprises: a storing portion for storing a schedule for PSTs, established in advance; a PST initiation instructing portion for sending, to the positioner, a PST initiating instruction following the schedule stored in the storing portion; a timer for measuring elapsed time from the completion of a PST in response to a PST completion report from the positioner; and a PST initiation prohibition evaluating portion for comparing the elapsed time from the previous PST to a PST minimum interval that is established in advance, when there has been a query from the positioner as to whether or not PST initiation is permitted, and for reporting, to the positioner, whether or not PST initiation is permitted.

A safety instrument system according to the present invention comprises: a positioner for controlling the degree of opening of an emergency cutoff valve that is provided in a pipe in a plant; and a higher-level system for controlling a PST of the emergency cutoff valve, wherein: the positioner comprises: a querying portion for querying the higher-level system as to whether or not PST initiation is permitted, when a PST initiating instruction has been received from the inputting device in the work area where in the positioner is provided; a PST executing portion for executing a PST in the emergency cutoff valve in response to an initiating instruction from the higher-level system and for executing a PST in the emergency cutoff valve through an initiating instruction from an inputting device in response to a PST initiation permitted/prohibited report from the higher-level system; and a reporting portion for reporting the completion of a PST to the higher-level system, wherein: the higher-level system comprises: a storing portion for storing a schedule for PSTs, established in advance; a PST initiation instructing portion for sending, to the positioner, a PST initiating instruction; timer for measuring elapsed time from the completion of a PST in response to a PST completion report from the positioner; and a PST initiation prohibition evaluating portion for comparing the elapsed time from the previous PST to the PST minimum interval that has been set in advance, when there has been a query from a positioner as to whether or not PST initiation is permitted, for reporting, to the positioner, whether or not PST initiation is permitted, and, when PST initiation timing has been reached based on the schedule, for comparing the elapsed time from the previous PST to the PST minimum interval that has been set in advance, and, if PST initiation is permitted, instructing the PST initiation instructing portion to send a PST initiating instruction to the positioner.
In the first example configuration of a safety instrument system according to the present invention, the higher-level system further comprises a schedule modifying portion for modifying the schedule so that the time at which the previous PST was completed is the starting point if, when the PST initiation timing based on the schedule has been reached, the PST initiation is prohibited by the PST initiation prohibition evaluating portion.

A PST initiating method according to the present invention includes: a timing step for timing elapsed time from the completion of a PST on the emergency cutoff valve by a positioner for controlling the degree of opening of an emergency cutoff valve that is provided in a pipe in a plant; a PST initiation prohibition evaluating step for evaluating whether or not a PST initiation is permitted, by comparing elapsed time from the previous PST, to a PST minimum interval that is set in advance, when a PST initiating instruction has been received by the positioner from a higher-level system that manages PSTs on the emergency cutoff valve or from an inputting device on the plant floor wherein the positioner is provided; and a PST executing step wherein the positioner executes a PST on the emergency cutoff valve when PST initiation is permitted.

A PST initiating method according to the present invention includes: a querying step for querying the higher-level system that manages PSTs on the emergency cutoff valve as to whether or not PST initiation is permitted, when the positioner that controls the degree of opening of the emergency cutoff valve that is provided in a pipe in a plant has received a PST initiating instruction for the emergency cutoff valve from the inputting device in the work area where in the positioner is provided; a PST executing step wherein the positioner executes a PST in the emergency cutoff valve in response to an initiating instruction from the higher-level system and for executing a PST in the emergency cutoff valve through an initiating instruction from an inputting device in response to a PST initiation permitted/prohibited report from the higher-level system; a reporting step wherein the positioner reports the completion of a PST to the higher-level system; a PST initiation instructing step wherein the higher-level system sends, to the positioner, a PST initiating instruction following a PST schedule that is established in advance; a timing step wherein the higher-level system measures elapsed time from the completion of a PST in response to a PST completion report from the positioner; and a PST initiation prohibition evaluating step wherein the higher-level system compares the elapsed time from the previous PST to a PST minimum interval that is established in advance, when there has been a query from the positioner as to whether or not PST initiation is permitted, reports, to the positioner, whether or not PST initiation is permitted.

A PST initiating method according to the present invention includes: a querying step for querying the higher-level system that manages PSTs on the emergency cutoff valve as to whether or not PST initiation is permitted, when the positioner that controls the degree of opening of the emergency cutoff valve that is provided in a pipe in a plant has received a PST initiating instruction for the emergency cutoff valve from the inputting device in the work area where in the positioner is provided; a PST executing step wherein the positioner executes a PST in the emergency cutoff valve in response to an initiating instruction from the higher-level system and for executing a PST in the emergency cutoff valve through an initiating instruction from an inputting device in response to a PST initiation permitted/prohibited report from the higher-level system; a reporting step wherein the positioner reports the completion of a PST to the higher-level system; a timing step wherein the higher-level system measures elapsed time from the completion of a PST in response to a PST completion report from the positioner; and a PST initiation prohibition evaluating step wherein the higher-level system compares the elapsed time from the previous PST to a PST minimum interval that has been set in advance, when there has been a query from a positioner as to whether or not PST initiation is permitted, reports, to the positioner, whether or not PST initiation is permitted, and, when PST initiation timing has been reached based on a schedule that is established in advance, compares the elapsed time from the previous PST to the PST minimum interval that has been set in advance, and, if PST initiation is permitted, sends a PST initiating instruction to the positioner. The first example configuration of a PST initiating method according to the present invention further includes a schedule modifying step wherein the higher-level system modifies the schedule so that the time at which the previous PST was completed is the starting point if, when the PST initiation timing based on the schedule has been reached, the PST initiation is prohibited by the PST initiation prohibition evaluating step.

With the present invention, when the positioner has received a PST initiating instruction from a higher-level system or from an inputting device, the elapsed time from the previous PST is compared with a PST minimum interval that is set in advance to determine whether or not PST initiation is permitted, thus making it possible to prevent unnecessary PST initiation, making it possible to suppress the adverse effect on the plant that would be caused by unnecessary PST initiation.

Moreover, in the present invention, when there is a PST initiation permission query from a positioner, a higher-level system compares the elapsed time from the previous PST to a PST minimum interval that is set in advance, and notifies the positioner as to whether or not PST initiation is permitted, thus making it possible to prevent unnecessary PST initiation, making it possible to suppress the adverse effect on the plant that would be caused by unnecessary PST initiation.

Moreover, in the present invention, when there is a PST initiation permission query from a positioner, a higher-level system compares the elapsed time from the previous PST to a PST minimum interval that is set in advance, and notifies the positioner as to whether or not PST initiation is permitted, and when the timing for PST initiation based on a schedule arrives, the higher-level system compares the elapsed time since the previous PST, and if the PST initiation is permitted, an instruction is sent to PST initiation instructing portion to cause it to send a PST initiating instruction to the positioner, making it possible to prevent unnecessary PST initiation without discriminating between a PST through an initiating instruction from the higher-level system and a PST through an initiating instruction from an inputting device on the plant floor, thus making it possible to prevent unnecessary PST initiation, making it possible to suppress the adverse effect on the plant that would be caused by unnecessary PST initiation.

Moreover, when the timing of PST initiation based on a schedule has arrived, if the PST initiation is prohibited, the higher-level system modifies the schedule starting at the point in time wherein the previous PST was completed, enabling the PST schedule to be modified depending on the PST execution status.

According to an embodiment, a safety instrument system is provided comprising a positioner for controlling the degree of opening of an emergency cutoff valve that is provided in a pipe in a plant, and a higher-level system for controlling the PSTs (partial stroke tests) of the emergency cutoff valve. The positioner has: a PST executing portion for executing a PST on the emergency cutoff valve in response to an initiating instruction from the higher-level system or to an initiating instruction from an operating panel on the plant floor wherein the positioner is provided; a timer for measuring elapsed time from the completion of a PST on the emergency cutoff valve; and a PST initiation prohibition evaluating portion for evaluating whether or not a PST initiation is permitted, by comparing elapsed time from the previous PST, to a PST minimum interval that is set in advance, when a PST initiating instruction has been received from the higher-level system or from an operating panel.

Further advantages, features, aspects and details are evident from the dependent claims, the description and the drawings.

### Brief Descriptions of the Drawings

So that the manner in which the above recited features of the present invention can be understood in detail, a more particular description of the invention, briefly summarized above, may be read by reference to embodiments. The accompanying drawings relate to embodiments of the invention and are described in the following:
FIG. 1 is a block diagram illustrating a structure for a safety instrument system according to a first embodiment according to the present invention.
FIG. 2 is a block diagram illustrating a structure for a positioner and a higher-level system in the safety instrument system according to the first embodiment according to the present invention.
FIG. 3 is a flowchart illustrating the operation of the safety instrument system according to the first embodiment according to the present invention.
FIG. 4 is a block diagram illustrating a structure for a positioner and a higher-level system in the safety instrument system according to the second embodiment according to the present invention.
FIG. 5 is a flowchart illustrating the operation of the safety instrument system according to the second embodiment according to the present invention.
FIG. 6 is a block diagram illustrating a structure for a positioner and a higher-level system in the safety instrument system according to the third embodiment according to the present invention.
FIG. 7 is a flowchart illustrating the operation of the safety instrument system according to the third embodiment according to the present invention.
FIG. 8 is a diagram illustrating the state of PST execution by the safety instrument system according to the third embodiment according to the present invention.
FIG. 9 is a block diagram illustrating a structure for a positioner and a higher-level system in the safety instrument system according to the fourth embodiment according to the present invention.
FIG. 10 is a flowchart illustrating the operation of the safety instrument system according to the fourth embodiment according to the present invention.
FIG. 11 is a diagram illustrating the state of the schedule modification by the safety instrument system according to the fourth embodiment according to the present invention.

The PST interval that is the guideline can be established in advance based on, for example, safety validation. Consequently, it is possible to reduce problems caused by unlimited PST initiation on the plant floor while maintaining flexibility for PST initiation depending on the situation on the plant floor, through the provision of a specific initiation prohibition interval after PST initiation. This makes it possible to both not be biased towards top-down PST initiation that undervalues the plant floor evaluations, and also is not, conversely, biased toward chaotic PST initiation that will have an adverse effect on the production status.

### First Embodiment

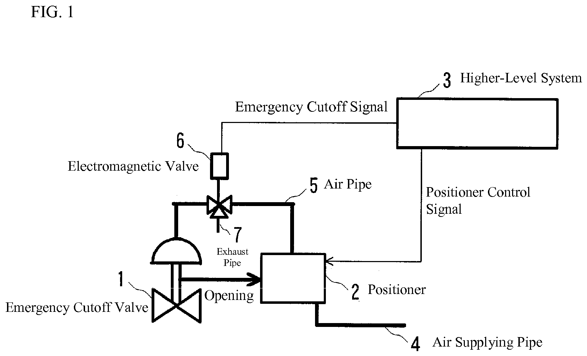

Forms for carrying out the present invention will be explained below in reference to the figures. FIG. 1 is a block diagram illustrating a structure for a safety instrument system according to a first embodiment according to the present invention.
An emergency cutoff valve 1 that is provided in order to prevent an incident in a plant is provided in a pipe in the plant and is driven pneumatically. A positioner 2 that controls the opening of the emergency cutoff valve 1 receives a positioner control signal from a higher-level system 3 that controls the maintenance of the various field devices in the plant, and, in response to an opening instruction value indicated by the positioner control signal, uses air that is supplied from an air supplying pipe 4 to send the required operating device air pressure to the emergency cutoff valve. The operating device air pressure from the positioner 2 is provided to the emergency cutoff valve 1 through an air pipe 5. Moreover, the positioner 2 is able to measure the degree of opening of the emergency cutoff valve 1 through an opening feedback mechanism.

At the time of an emergency cutoff, triggered by a fault in the plant, the emergency cutoff signal is sent from the higher-level system 3 to an electromagnetic valve 6 that is provided in the air pipe 5 between the positioner 2 and the emergency cutoff valve 1. In response to the emergency cutoff signal, the electromagnetic valve 6 opens the path of the air pipe 5 toward the air exhaust pipe 7, to release the operating device air pressure. The emergency cutoff valve 1 is closed thereby.

When a PST is executed, the degree of opening of the emergency cutoff valve 1 is varied, by the positioner 2, as, for example, 100% → 90% → 100%, making it possible to confirm the initial action of the emergency cutoff valve 1. The PST may be initiated by a positioner control signal from the higher-level system 3, and may also be initiated through a control panel, or the like, that is an inputting device that is provided on the positioner 2. One emergency cutoff valve 1 of this type, or a plurality thereof, is provided in the plant.

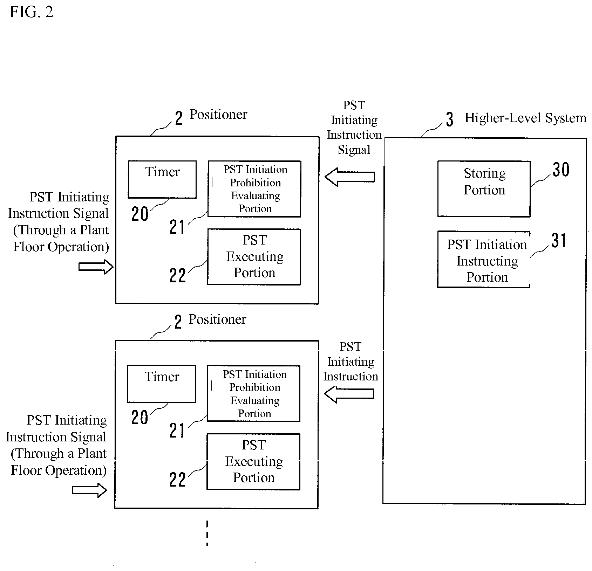

FIG. 2 is a block diagram illustrating a structure of a positioner 2 and a higher-level system 3 according to the present embodiment. In the present embodiment, a function for evaluating whether or not to initiate the PST is provided within the positioner 2.
A positioner 2 is provided for each emergency cutoff valve. Each positioner 2 comprises: a timer 20, which is timing means for measuring the time that has elapsed since the completion of a PST by the corresponding emergency cutoff valve 1; a PST initiation prohibition evaluating portion 21 for evaluating whether the initiation of a PST for the corresponding emergency cutoff valve 1 is to be prohibited or permitted, based on the elapsed time measured by the timer 20; and a PST executing portion 22 for executing the PST for the corresponding emergency cutoff valve 1, for evaluating the completion of the PST, for evaluating whether or not there is a fault in the emergency cutoff valve 1, and the like. The positioner 2 is able to receive both a PST initiating instruction signal that is inputted from an operating panel that is an inputting device, not shown, and a PST initiating instruction signal that is sent from the higher-level system 3.

The higher-level system 3 comprises: a storing portion 30 for storing, for each emergency cutoff valve, a PST schedule that has been established in advance; and a PST initiating instructing portion 31 for initiating PSTs in accordance with the schedule.

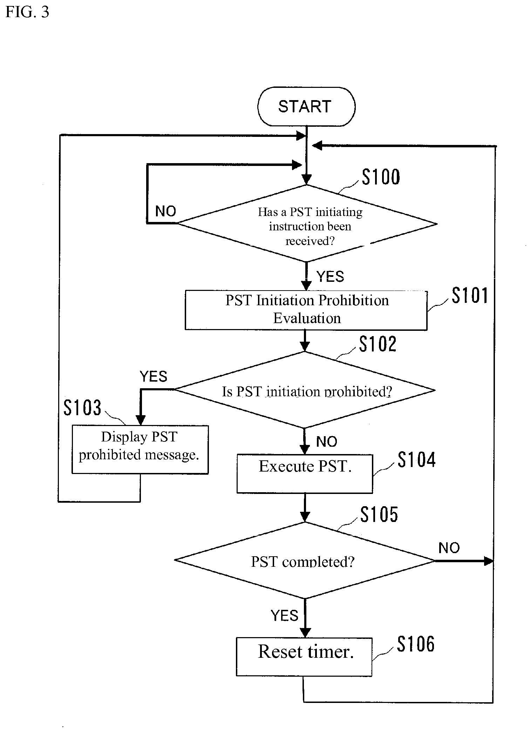

The operation of the safety instrument system of the present embodiment will be explained below in reference to FIG. 3. When a PST initiation prohibition evaluating portion 21 of an individual positioner 2 receives a PST initiating instruction signal from the operating panel of the positioner 2 or from the higher-level system 3 (YES in Step S100 in FIG. 3), the elapsed time from the previous PST, measured by the timer 20, is compared to the PST minimum interval that is set in advance, to evaluate whether or not the initiation of a PST on the corresponding emergency cutoff valve 1 is to be prohibited (Step S101 in the FIG. 3). Note that the PST minimum interval is set, in the storing portion 30 of the higher-level system 3, to a value that is no greater than the PST interval that is established in the schedule.

If the elapsed time from the previous PST is less than the PST minimum interval, then the PST initiation prohibition evaluating portion 21 prohibits the initiation of a PST on the corresponding emergency cutoff valve 1 (YES in Step S102 of FIG. 3). Given this, the PST initiation prohibition evaluating portion 21 causes the display, on an outputting device such as the operating panel of the positioner 2, of a message to the effect that initiation of the PST is prohibited (Step S103 in FIG. 3). Conversely, the PST initiation prohibition evaluating portion 21 may send the message to the effect that initiation of the PST is prohibited to the higher-level system 3. In this case, the message is displayed on a display screen of the higher-level system 3.

When the elapsed time from the previous PST is no less than the PST minimum interval, the PST initiation prohibition evaluating portion 21 permits the initiation of a PST on the corresponding emergency cutoff valve 1 (NO in Step S102 in FIG. 3), and causes the PST executing portion 22 to execute the PST (Step S104 in FIG. 3). As described above, the PST executing portion 22 varies the opening of the emergency cutoff valve 1 as, for example, 100% → 90% → 100%, and checks the action of the emergency cutoff valve 1.

When the PST has been completed (YES in Step S105 of FIG. 3), the timer 20 resets the elapsed time to 0, regardless of the result of the PST (regardless of whether the emergency cutoff valve 1 is operating properly or is faulty) (Step S106 in FIG. 3). If for some reason, such as cancellation of the PST, the PST is not completed (NO in Step S105 in FIG. 3), the timer 20 continues measuring the elapsed time, without resetting the elapsed time.

As described above, when, in the present embodiment, the interval for initiating a PST is shorter than the PST minimum interval that is set in advance, the initiation of the PST is not permitted, thereby making it possible to suppress the adverse effects on the plant caused by initiating unnecessary PSTs.

### Second Embodiment

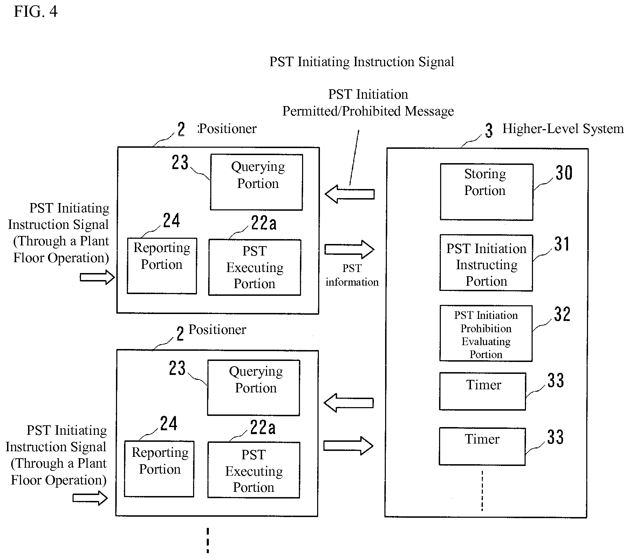

A second embodiment according to the present invention will be explained next. FIG. 4 is a block diagram illustrating a structure of a positioner 2 and a higher-level system 3 according to the present embodiment. In the present embodiment as well, the overall structure of the safety instrument system is identical to that of the first embodiment, and thus the explanation will use the codes of FIG. 1. In the first embodiment, the positioner 2 controlled the PST initiation interval, so evaluations as to whether or not to permit PST initiation were performed individually. On the other hand, in the present embodiment the higher-level system 3 controls the PST initiation intervals for a plurality of emergency cutoff valves 1, to evaluate whether or not the PST initiations are permitted.

The higher-level system 3 comprises: a storing portion 30; a PST initiation instructing portion 31; a PST initiation prohibition evaluating portion 32 for evaluating whether PST initiations for the individual emergency cutoff valves 1 are to be prohibited or permitted; and a timer 33 for measuring the elapsed time from the completion of a PST through a PST initiating instruction signal from an operating panel of a positioner 2. A timer 33 is provided for each individual positioner 2. In addition to the PST initiating instruction signals, signals for providing notification as to whether or not a PST initiation is permitted (PST initiation permitted/prohibited messages) are sent to the individual positioners 2 from the higher-level system 3.

Each positioner 2 comprises: a PST executing portion 22a for executing a PST on the corresponding emergency cutoff valve 1 in response to a PST initiation permitted/prohibited message that is sent from the higher-level system 3; a querying portion 23 for sending a query to the higher-level system 3 as to whether or not PST initiation is permitted; and a reporting portion 24 for reporting, to the higher-level system 3, a PST completion. Result information for a PST that has been executed, specifically, information on the completion timing of the PST and information indicating whether the PST is complete or incomplete, is sent from the positioner 2 to the higher-level system 3.

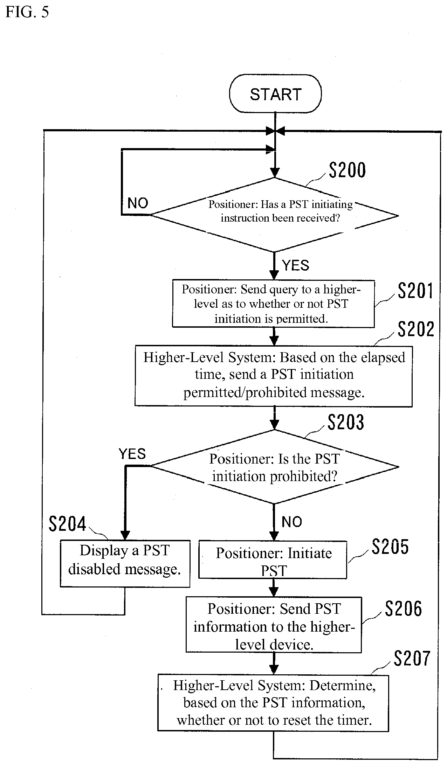

The operation of the safety instrument system of the present embodiment will be explained below in reference to FIG. 5. The PST initiation instructing portion 31 of the higher-level system 3 periodically sends PST initiating instruction signals, for the individual emergency cutoff valves 1, to the corresponding positioners 2 according to a schedule that is stored in a storing portion 30. The PST executing portion 22a of the individual positioner 2, upon receipt of a PST initiating instruction signal from the higher-level system 3, executes a PST on the corresponding emergency cutoff valve 1.

Moreover, when a PST initiating instruction signal has been received from an operating panel of an individual positioner 2 (YES in Step S200 of FIG. 5), the querying portion 23 of the positioner 2 queries the higher-level system 3 as to whether or not the initiation of a PST is permitted (Step S201 in FIG. 5).

The PST initiation prohibition evaluating portion 32 of the higher-level system 3 obtains, from the timer 33 corresponding to this positioner 2, the value for the elapsed time from when the previous PST was initiated in response to a PST initiating instruction signal from the operating panel of the positioner 2 that sent the inquiry, and compares this elapsed time to the PST minimum interval that has been set in advance, to determine whether or not initiation of a PST on the positioner 2 that made the query is permitted, and sends the result of the evaluation to the positioner 2 that made the query (Step S202 in FIG. 5). If the elapsed time from the previous PST is less than the PST minimum interval, the PST initiation prohibition evaluating portion 32 sends a PST initiation prohibiting message, but if the elapsed time from the previous PST is no less than the PST minimum interval, it sends a PST initiation permitting message.

When a PST initiation prohibiting message is received from the higher-level system 3 (YES in Step S203 of FIG. 5), the PST executing portion 22a of the positioner 2 that made the query to the higher-level system 3 causes a message to the effect that the PST initiation is prohibited to be displayed on an outputting device, such as the operating panel, of the positioner 2 (Step S204 in FIG. 5). If a PST initiation permitting message is received from the higher-level system 3 (NO in Step S203 of FIG. 5), the PST executing portion 22a executes the PST on the corresponding emergency cutoff valve 1 (Step S205 in FIG. 5). Given this, the reporting portion 24 sends the PST result information to the higher-level system 3 (Step S206 in FIG. 5).

When the PST initiation prohibition evaluating portion 32 of the higher-level system 3 has received PST result information from the positioner 2, and that information is result information for a PST that has been executed in response to a PST initiating instruction signal from an operating panel, a determination is made, based on this PST result information, as to whether or not to reset the timer 33 corresponding to this positioner 2 (Step S207 in FIG. 5). Specifically, when PST result information indicating that the PST has been completed has been received, the PST initiation prohibition evaluating portion 32 resets to 0 the elapsed time that is measured by the timer 33, but if PST result information that indicates that the PST was not completed is received, the measurement of the elapsed time is continued.

As described above, the present embodiment enables the provision of a system that enables initiation of a PST flexibly depending on conditions on the plant floor and also that enables initiation of a PST at regular intervals that are established in advance by the safety instrument (top-down PST control). One may consider a policy wherein the PST can be moved forward if, for example, if the operating conditions (the quality of the materials, for example) in the plant at the time at which the subsequent PST is scheduled are bad, and the manager on the work floor wishes to avoid executing the PST at that time. There are cases wherein excessive PSTs that do not have the effect of maintaining the average value for the PFD may be performed when the elapsed time from the previous PST is short, even when such a decision has been made on the plant floor. In the present embodiment initiation of the PST is not permitted if the elapsed time since the previous PST initiation by an action on the plant floor is shorter than the PST minimum interval when there is an attempt to initiate a PST through operating the operating panel on the plant floor, thus making it possible to cause the manager on the plant floor to reconsider the timing with which to initiate the PST.

### Third Embodiment

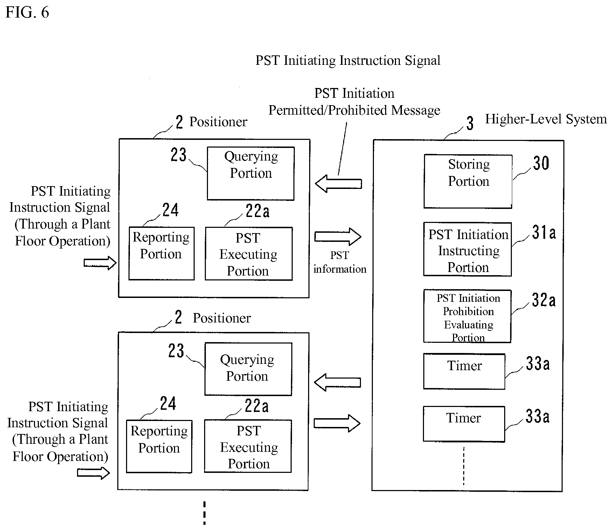

A third embodiment according to the present invention will be explained next. FIG. 6 is a block diagram illustrating a structure of a positioner 2 and a higher-level system 3 according to the present embodiment. In the present embodiment as well, the overall structure of the safety instrument system is identical to that of the first embodiment, and thus the explanation will use the codes of FIG. 1. In the second embodiment, PSTs were executed periodically through instructions from the higher-level system 3 regardless of the PSTs through instructions from the operating panel on the plant floor. In contrast, in the present embodiment, the PSTs through instructions from the higher-level system 3 and the PSTs through instructions from the operating panel on the plant floor are linked.

If, after the completion of a PST through an action on the plant floor a PST that was originally scheduled is initiated through a PST initiating instruction signal from the higher-level system 3 without having adequate time, the PST would be an unnecessary PST, so the PST need not be performed. Consequently, if there is a PST through an action on the plant floor, omitting the PST through the PST initiating instruction signal from the higher-level system 3 makes it possible to avoid initiating an unnecessary PST.

The higher-level system 3 comprises: a storing portion 30; a PST initiation instructing portion 31a; a PST initiation prohibition evaluating portion 32a; and a timer 33a. While the timer 33 in the second embodiment measured the elapsed time from the completion of a PST through an instruction from the operating panel on the plant floor, the timer 33a in the present embodiment measures the elapsed time from the completion of a PST, without distinguishing between a PST through an instruction from the operating panel on the plant floor and a PST through an instruction from the higher-level system 3. A timer 33a is provided for each individual positioner 2. Each positioner 2 comprises a PST executing portion 22a, a querying portion 23, and a reporting portion 24.

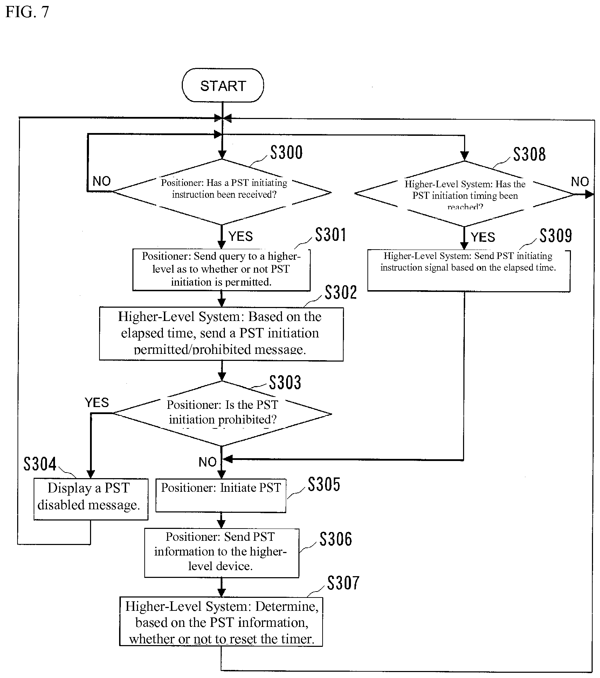

The operation of the safety instrument system of the present embodiment will be explained below in reference to FIG. 7. The procedures in Step S300, S301, and S303 through S306 in FIG. 7 are, respectively, identical to those in Step S200, S201, and S203 through S206 in FIG. 5.

The PST initiation prohibition evaluating portion 32a of the higher-level system 3, when there is a query from a positioner 2, acquires from the timer 33a corresponding to the positioner 2, the value for the elapsed time from the previous PST execution by the positioner 2, and compares this elapsed time to the PST minimum interval to evaluate whether or not initiation of a PST in the positioner 2 that made the query is to be permitted, and sends the evaluation result to the positioner 2 that made the query (Step S302 in FIG. 7). While this procedure is identical to Step S202 of FIG. 5, as described above, the timer 33a is different in the point that it measures the elapsed time without distinguishing between a PST due to a PST initiating instruction signal from an operating panel and a PST to a PST initiating instruction signal from the higher-level system 3.

Moreover, the PST initiation prohibition evaluating portion 32a references the schedule that is stored in the storing portion 30, and if the evaluation is that the PST initiation timing has been reached for a given emergency cutoff valve 1 (YES in Step S308 in FIG. 7), then the value for the elapsed time from the time wherein the positioner 2 corresponding to that emergency cutoff valve 1 last executed a PST is obtained from the timer 33a corresponding to that positioner 2, and the elapsed time is compared to the PST minimum interval to evaluate whether or not to initiate the PST (Step S309 in FIG. 7). If the elapsed time from the previous PST is less than the PST minimum interval, the PST initiation prohibition evaluating portion 32a prohibits initiation of the PST. Moreover, if the elapsed time from the previous PST is no less than the PST minimum interval, the PST initiation prohibition evaluating portion 32a permits the initiation of the PST, and instructs the PST initiating instruction portion 31a to send the PST initiating instruction signal. In response to this instruction, the PST initiation instructing portion 31a sends a PST initiating instruction signal to the positioner 2 corresponding to the emergency cutoff valve 1 that has reached the timing for initiating the PST.
The PST executing portion 22a of the individual positioner 2, upon receipt of a PST initiating instruction signal from the higher-level system 3, executes a PST on the corresponding emergency cutoff valve 1.

Additionally, upon receipt of the PST result information from the positioner 2, the PST initiation prohibition evaluating portion 32a determines whether or not to reset the timer 33a corresponding to the positioner 2 (Step S307 in FIG. 7). This procedure is identical to Step S207 in FIG. 5, but is different in the point that there is no differentiation between result information for a PST through a PST initiating instruction signal from the operating panel of the positioner 2 and result information for a PST through a PST initiating instruction signal from the higher-level system 3.

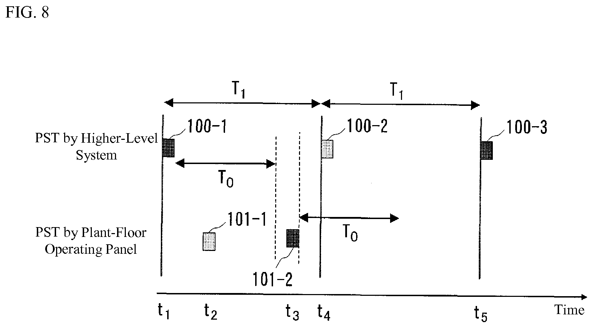

FIG. 8 is a diagram illustrating the state of PST execution according to the present form execution of embodiment. In the example in FIG. 8, PSTs 100-1, 100-2, 100-3,... , are performed periodically through the schedule in the higher-level system 3. The interval for PSTs according to the schedule in the higher-level system 3 is T₁. PST 100-1 is executed by the schedule of the higher-level system 3 at a time t₁, and when that PST has been completed, the corresponding timer 33a is resetted, and measurement of the elapsed time is started.

While following this an attempt is made to execute a PST 101-1 through operating the operating panel on the plant floor, by a manager on the plant floor, at time t₂, the elapsed time from the previous PST 100-1 is less than the PST minimum interval To, and thus the PST initiation prohibition evaluating portion 32a of the higher-level system 3 prohibits initiation of this PST 101-1 because the elapsed time from the previous PST 100-1 is less than the PST minimum interval T₀. As described above, the PST minimum interval T₀ is set to a value that is less than the PST interval T₁ that is set by the schedule in the higher-level system 3. At time t₃, the elapsed time that is measured by the timer 33a is no less than the PST minimum interval To, so the PST initiation prohibition evaluating portion 32a permits execution of the PST 101-2 by the instruction from the operating panel on the plant floor. When the PST is completed, the corresponding timer 33a is resetted, and measurement of the elapsed time is started.

Following this, an attempt is made to execute the PST 100-2 through the schedule of the higher-level system 3, but because the elapsed time from PST 101-2 is less than the PST minimum interval T₀, the PST initiation prohibition evaluating portion 32a prohibits initiation of this PST 100-2. In the second embodiment, PSTs were executed periodically through instructions from the higher-level system 3 regardless of the PSTs through instructions from the operating panel on the plant floor. In contrast, in the present embodiment no distinction is made between the PSTs by instructions from the higher-level system 3 and PSTs by instructions from the operating panel on the plant floor when evaluating whether or not to permit initiation of a PST, thus making it possible to omit the PST 100-2, thus making it possible to avoid initiating unnecessary PSTs.

### [Fourth Form of Embodiment]

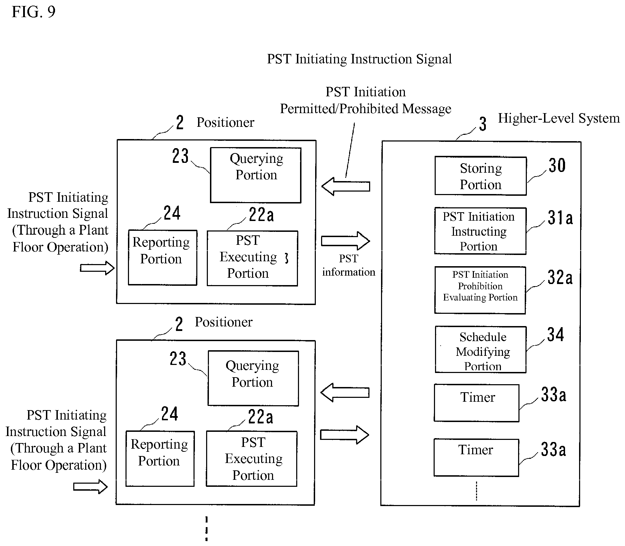

A fourth embodiment according to the present invention will be explained next. FIG. 9 is a block diagram illustrating a structure of a positioner 2 and a higher-level system 3 according to the present embodiment. In the present embodiment as well, the overall structure of the safety instrument system is identical to that of the first embodiment, and thus the explanation will use the codes of FIG. 1. In the third embodiment, when a PST of an instruction from the higher-level system 3 is evaluated as being unnecessary, that PST may be omitted, but the schedule in the higher-level system 3 was not modified, so that the PSTs are executed periodically following the schedule that has been set in advance. In contrast, in the present embodiment the schedule in the higher-level system 3 is modified depending on the status of execution of PSTs.

The higher-level system 3 comprises: a storing portion 30; a PST initiation instructing portion 31a; a PST initiation prohibition evaluating portion 32a; a timer 33a, and a schedule modifying portion 34. Each positioner 2 comprises a PST executing portion 22a, a querying portion 23, and a reporting portion 24.

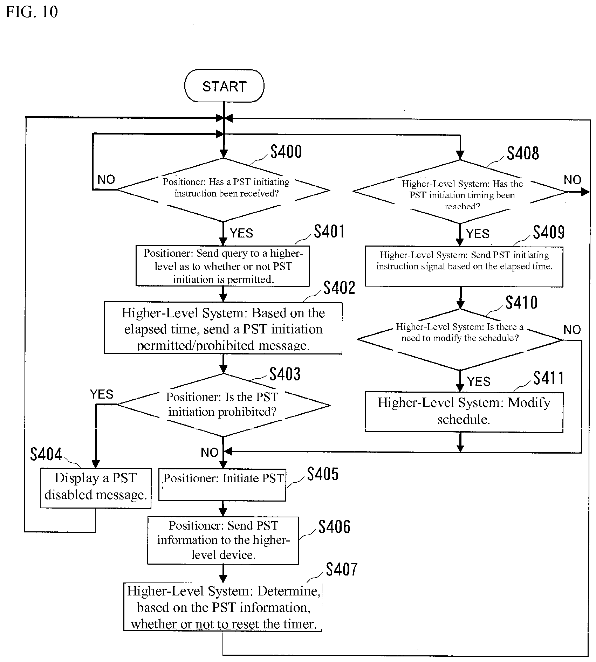

The operation of the safety instrument system of the present embodiment will be explained below in reference to FIG. 10. The procedures in Steps S400 through S409 in FIG. 10 are, respectively, identical to those in Step S300 through S309 in FIG. 7.
The schedule modifying portion 34 of the higher-level system 3 evaluates whether or not it is necessary to modify the schedule (Step S410 in FIG. 10). When the initiation of a PST through the schedule of the higher-level system 3 was prohibited in Step S409, the schedule modifying portion 34 evaluates that it is necessary to modify the schedule.

When there has been an evaluation that a schedule requires modification (YES in Step S410 in FIG. 10), the schedule modifying portion 34 modifies the schedule for the emergency cutoff valve 1 for which the initiation of the PST had been prohibited, from among the schedules for PSTs for all of the emergency cutoff valves 1, stored in the storing portion 30, so that the time of the completion of the previous PST for that emergency cutoff valve 1 is the starting point (Step S411 in FIG. 10).

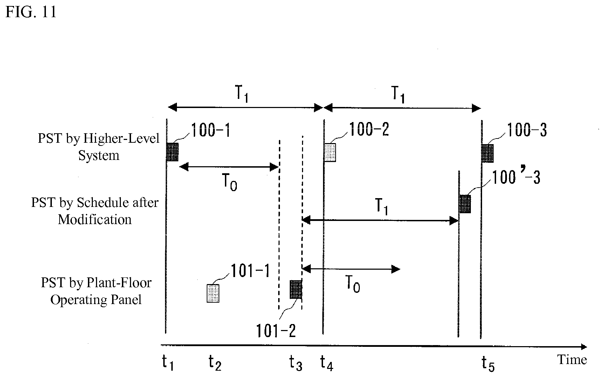

FIG. 11 is a diagram illustrating the state of schedule modification according to the present form of embodiment. As explained using FIG. 8, in the second embodiment there was no modification to the schedule in the higher-level system 3 even when the initiation of the PST 100-2 was prohibited. In contrast, in the present embodiment, when the initiation of the PST 100-2 is prohibited, the schedule modifying portion 34 modifies the schedule for the emergency cutoff valve 1 for which the initiation of this PST 100-2 was prohibited, so that the time of completion of the previous PST 101-2 is the starting point. That is, the schedule is modified through shifting so that the subsequent PST 100'-3 is executed after the interval T₁ has elapsed from the time t₃ at which PST 101-2 was completed. In this way, the present embodiment enables the schedule for PSTs to be modified depending on the state of execution of PSTs.

Each of the positioners 2 and the higher-level systems 3 described in the first through fourth embodiments can each be embodied through a computer that comprises a CPU (Central Processing Unit), a storage device, and an interface, along with a program for controlling these hardware resources. The CPUs for the individual devices execute the procedures described in the first through fourth embodiments following programs that are stored in the storage devices.

The present invention can be applied to partial stroke testing of emergency cutoff valves that are provided in order to prevent incidents in a plant.

### [Reference signs]

- 1:: Emergency Cutoff Valve
- 2:: Positioner
- 3:: Higher-Level System
- 4:: Air Supplying Pipe
- 5:: Air Pipe
- 6:: Electromagnetic Valve
- 7:: Exhaust Pipe
- 20, 33, 33a:: Timers
- 21, 32, 32a:: PST Initiation Prohibition Evaluating Portions
- 22, 22a:: PST Executing Portions
- 23:: Querying Portion
- 24:: Reporting Portion
- 30:: Storing Portion
- 31, 31a:: PST Initiation Instructing Portions
- 34:: Schedule Modifying Portion
- 100-1, 100-2: PST

## Claims

1. A safety instrument system comprising:
a positioner (2) for controlling the degree of opening of an emergency cutoff valve (1) that is provided in a pipe in a plant; and
a higher-level system (3) for controlling a partial stroke test, PST, (100-1, 100-2) of the emergency cutoff valve (1), wherein:
the positioner (2) comprises:
a PST executing portion (22) for executing a PST in the emergency cutoff valve (1) in response to an initiating instruction from the higher-level system (3) or an initiating instruction from an inputting device in the workplace where the positioner (2) is provided;
**characterised in that** the positioner further comprises:
a timer (20) for measuring elapsed time from the completion of a PST on the emergency cutoff valve (1); and
a PST initiation prohibition evaluating portion (21) for evaluating whether or not a PST initiation is permitted, by comparing elapsed time from the previous PST, to a PST minimum interval (T0) that is set in advance, when a PST initiating instruction has been received from the higher-level system (3) or from the inputting device.

2. A safety instrument system comprising:
a positioner (2) for controlling the degree of opening of an emergency cutoff valve (1) that is provided in a pipe in a plant; and
a higher-level system (3) for controlling a PST of the emergency cutoff valve (1), wherein
the positioner (2) comprises:
a querying portion (23) for querying the higher-level system (3) as to whether or not PST initiation is permitted, when a PST initiating instruction has been received from the inputting device in the work area where the positioner (2) is provided;
a PST executing portion (22a) for executing a PST in the emergency cutoff valve (1) in response to an initiating instruction from the higher-level system (3) and for executing a PST in the emergency cutoff valve (1) through an initiating instruction from an inputting device in response to a PST initiation permitted/prohibited report from the higher-level system (3); and
reporting portion (24) for reporting the completion of a PST to the higher-level system (3), wherein
the higher-level system (3) comprises:
a storing portion (30) for storing a schedule for PSTs, established in advance;
a PST initiation instructing portion (31, 31a) for sending, to the positioner (2), a PST initiating instruction following the schedule stored in the storing portion (30);
a timer (33) for measuring elapsed time from the completion of a PST in response to a PST completion report from the positioner (2); and
a PST initiation prohibition evaluating portion (32, 32a) for comparing the elapsed time from the previous PST to a PST minimum interval (T0) that is established in advance, when there has been a query from the positioner (2) as to whether or not PST initiation is permitted, and for reporting, to the positioner (2), whether or not PST initiation is permitted.

3. A safety instrument system according to claim 2, wherein the PST initiation prohibition evaluating portion (32, 32a) is further adapted, when PST initiation timing has been reached based on the schedule, to compare the elapsed time from the previous PST to the PST minimum interval (T0) that has been set in advance, and, if the elapsed time from the previous PST is not less than the PST minimum interval, to instruct the PST initiation instructing portion (31, 31a) to send a PST initiating instruction to the positioner (2).

4. A safety instrument system as set forth in Claim 3, wherein:
the higher-level system (3) further comprises schedule modifying portion for modifying the schedule so that the time at which the previous PST was completed is the starting point for the modified schedule for PSTs if, when the PST initiation timing based on the schedule has been reached, the PST initiation is prohibited by the PST initiation prohibition evaluating portion (32, 32a).

5. A PST executing method, including:
a timing step for timing elapsed time from the completion of a PST on the emergency cutoff valve (1) by a positioner (2) for controlling the degree of opening of an emergency cutoff valve (1) that is provided in a pipe in a plant;
a PST initiation prohibition evaluating step (S102) for evaluating whether or not a PST initiation is permitted, by comparing elapsed time from the previous PST, to a PST minimum interval (T0) that is set in advance, when a PST initiating instruction has been received by the positioner (2) from a higher-level system (3) that manages PSTs on the emergency cutoff valve (1) or from an inputting device on the plant floor wherein the positioner (2) is provided; and
a PST executing step (S104) wherein the positioner (2) executes a PST on the emergency cutoff valve (1) when PST initiation is permitted.

6. A PST executing method, including:
a querying step (S203, S303) for querying a higher-level system (3) that manages PSTs on the emergency cutoff valve (1) as to whether or not PST initiation is permitted, when the positioner (2) that controls the degree of opening of the emergency cutoff valve (1) that is provided in a pipe in a plant has received a PST initiating instruction for the emergency cutoff valve (1) from the inputting device in the work area where in the positioner (2) is provided;
a PST executing step (S205, S305) wherein the positioner (2) executes a PST in the emergency cutoff valve (1) in response to an initiating instruction from the higher-level system (3) and for executing a PST in the emergency cutoff valve (1) through an initiating instruction from an inputting device in response to a PST initiation permitted/prohibited report from the higher-level system (3);
a reporting step (S206, S306) wherein the positioner (2) reports the completion of a PST to the higher-level system (3);
a timing step wherein the higher-level system (3) measures elapsed time from the completion of a PST in response to a PST completion report from the positioner (2); and
a PST initiation prohibition evaluating step (S203, S303) wherein the higher-level system (3) compares the elapsed time from the previous PST to a PST minimum interval (T0) that is determined in advance, when there has been a query from the positioner (2) as to whether or not PST initiation is permitted, reports, to the positioner (2), whether or not PST initiation is permitted.

7. The PST executing method according to claim 6, further comprising:
a PST initiation instructing step wherein the higher-level system (3) sends, to the positioner (2), a PST initiating instruction following a PST schedule that is established in advance;

8. The PST executing method according to claim 6 or 7, wherein in the PST initiation prohibition evaluating step (S203, S303) when PST initiation timing has been reached based on a schedule that is established in advance, the higher-level system (3) compares (S308) the elapsed time from the previous PST to the PST minimum interval (T0) that has been set in advance, and, if the elapsed time from the previous PST is not less than the PST minimum interval, sends (S309) a PST initiating instruction to the positioner (2).

9. The PST executing method as set forth in Claim 8, further including:
a schedule modifying step wherein the higher-level system (3) modifies the schedule so that the time at which the previous PST was completed is the starting point for the modified schedule for PSTs if, when the PST initiation timing based on the schedule has been reached, the PST initiation is prohibited by the PST initiation prohibition evaluating step (S203, S303).

## Patentansprüche

1. Sicherheitsinstrumentensystem, umfassend:
einen Stellungsregler (2) zum Regeln des Öffnungsgrades eines Not-Absperrventils (1), das in einem Rohr in einem Werk vorgesehen ist; und
ein übergeordnetes System (3) zum Steuern eines Teilhubtests, PST, (100-1, 100-2) des Not-Absperrventils (1), wobei:
der Stellungsregler (2) umfasst:
einen PST-Ausführungsabschnitt (22) zum Ausführen eines PSTs am Not-Absperrventil (1) in Reaktion auf eine Auslöseanweisung vom übergeordneten System (3) oder eine Auslöseanweisung von einer Eingabevorrichtung im Arbeitsbereich, in dem der Stellungsregler (2) vorgesehen ist;
**dadurch gekennzeichnet, dass** der Stellungsregler ferner umfasst:
einen Zeitgeber (20) zum Messen einer verstrichenen Zeit ab Abschluss eines PSTs am Not-Absperrventil (1); und
einen PST-Auslöseverbot-Beurteilungsabschnitt (21) zum Beurteilen, ob eine PST-Auslösung erlaubt ist oder nicht, durch Vergleichen der verstrichenen Zeit ab dem vorherigen PST mit einem PST-Mindestintervall (T0), das im Voraus festgelegt wird, wenn eine PST-Auslöseanweisung vom übergeordneten System (3) oder von der Eingabevorrichtung empfangen wurde.

2. Sicherheitsinstrumentensystem, umfassend:
einen Stellungsregler (2) zum Regeln des Öffnungsgrades eines Not-Absperrventils (1), das in einem Rohr in einem Werk vorgesehen ist; und
ein übergeordnetes System (3) zum Steuern eines PSTs des Not-Absperrventils (1),
wobei:
der Stellungsregler (2) umfasst:
einen Abfrageabschnitt (23) zum Abfragen des übergeordneten Systems (3) im Hinblick darauf, ob PST-Auslösung erlaubt ist oder nicht, wenn eine PST-Auslöseanweisung von der Eingabevorrichtung im Arbeitsbereich empfangen wurde, in dem der Stellungsregler (2) vorgesehen ist;
einen PST-Ausführungsabschnitt (22a) zum Ausführen eines PSTs am Not-Absperrventil (1) in Reaktion auf eine Auslöseanweisung vom übergeordneten System (3) und zum Ausführen eines PSTs am Not-Absperrventil (1) durch eine Auslöseanweisung von einer Eingabevorrichtung in Reaktion auf eine PST-Auslösung-erlaubt/-verboten-Meldung vom übergeordneten System (3); und
eine Meldeabschnitt (24) zum Melden des Abschlusses eines PSTs an das übergeordnete System (3), wobei:
das übergeordnete System (3) umfasst:
einen Speicherabschnitt (30) zum Speichern eines Zeitplans für PSTs, der im Voraus festgelegt wird;
einen PST-Auslöseanweisungsabschnitt (31, 31a) zum Senden einer PST-Auslöseanweisung gemäß dem im Speicherabschnitt (30) gespeicherten Zeitplan an den Stellungsregler (2);
einen Zeitgeber (33) zum Messen einer verstrichenen Zeit ab dem Abschluss eines PSTs bis zu einer PST-Abschlussmeldung vom Stellungsregler (2); und
einen PST-Auslöseverbot-Beurteilungsabschnitt (32, 32a) zum Vergleichen der verstrichenen Zeit ab dem vorherigen PST mit einem PST-Mindestintervall (T0), das im Voraus festgelegt wird, wenn eine Abfrage vom Stellungsregler (2) im Hinblick darauf empfangen wurde, ob PST-Auslösung erlaubt ist oder nicht, und zum Melden an den Stellungsregler (2), ob PST-Auslösung erlaubt ist oder nicht.

3. Sicherheitsinstrumentensystem nach Anspruch 2, wobei der PST-Auslöseverbot-Beurteilungsabschnitt (32, 32a) ferner so ausgelegt ist, dass er, wenn die auf einem im Voraus festgelegten Zeitplan basierte PST-Auslösezeitvorgabe erreicht wurde, die verstrichene Zeit ab dem vorherigen PST mit dem PST-Mindestintervall (TO), das im Voraus festgelegt wurde, vergleicht und, wenn die verstrichene Zeit ab dem vorherigen PST nicht kürzer als das PST-Mindestintervall ist, den PST-Auslöseanweisungsabschnitt (31, 31a) anweist, eine PST-Auslöseanweisung an den Stellungsregler (2) zu senden.

4. Sicherheitsinstrumentensystem nach Anspruch 3, wobei:
das übergeordnete System (3) ferner einen Zeitplan-Modifikationsabschnitt zum derartigen Modifizieren des Zeitplans umfasst, dass die Zeit, zu welcher der vorherige PST abgeschlossen wurde, der Startpunkt für den modifizierten Zeitplan für PSTs ist, falls die PST-Auslösung durch den PST-Auslöseverbot-Beurteilungsabschnitt (32, 32a) verboten wird, wenn die auf dem Zeitplan basierte PST-Auslösezeitvorgabe erreicht wurde.

5. PST-Ausführungsverfahren, umfassend:
einen Zeitvorgabeschritt zum Vorgeben einer Ablaufzeit ab dem Abschluss eines PSTs am Not-Absperrventil (1) durch einen Stellungsregler (2) zum Regeln des Öffnungsgrades eines Not-Absperrventils (1), das in einem Rohr in einem Werk vorgesehen ist;
einen PST-Auslöseverbot-Beurteilungsschritt (S102) zum Beurteilen, ob eine PST-Auslösung erlaubt ist oder nicht, durch Vergleichen der verstrichenen Zeit ab dem vorherigen PST mit einem PST-Mindestintervall (T0), das im Voraus festgelegt wird, wenn eine PST-Auslöseanweisung von einem übergeordneten System (3), das PSTs am Not-Absperrventil (1) steuert, oder von einer Eingabevorrichtung in der Werkshalle, in welcher der Stellungsregler (2) vorgesehen ist, durch den Stellungsregler (2) empfangen wurde; und
einen PST-Ausführungsschritt (S104), wobei der Stellungsregler einen PST am Not-Absperrventil (1) durchführt, wenn PST-Auslösung erlaubt wird.

6. PST-Ausführungsverfahren, umfassend:
einen Abfrageschritt (S203, S303) zum Abfragen eines übergeordneten Systems (3), das PSTs am Not-Absperrventil (1) steuert, im Hinblick darauf, ob PST-Auslösung erlaubt ist oder nicht, wenn der Stellungsregler (2), der den Öffnungsgrad des Not-Absperrventils (1) regelt, das in einem Rohr in einem Werk vorgesehen ist, eine PST-Auslöseanweisung für das Not-Absperrventil (1) von der Eingabevorrichtung im Arbeitsbereich empfangen hat, in dem der Stellungsregler (2) vorgesehen ist;
einen PST-Ausführungsschritt (S205, S305), wobei der Stellungsregler (2) einen PST am Not-Absperrventil (1) in Reaktion auf eine Auslöseanweisung vom übergeordneten System (3) ausführt, und zum Ausführen eines PSTs am Not-Absperrventil (1) durch eine Auslöseanweisung von einer Eingabevorrichtung in Reaktion auf eine PST-Auslösungerlaubt/-verboten-Meldung vom übergeordneten System (3); und
einen Meldeschritt (S206, S306), wobei der Stellungsregler (2) den Abschluss eines PSTs an das bergeordnete System (3) meldet;
einen Zeitvorgabeschritt, wobei das übergeordnete System (3) eine verstrichene Zeit ab dem Abschuss eines PSTs in Reaktion auf eine PST-Abschlussmeldung vom Stellungsregler (2) misst; und
einen PST-Auslöseverbot-Beurteilungsschritt (S203, S303), wobei das übergeordnete System (3) die verstrichene Zeit ab dem vorherigen PST mit einem PST-Mindestintervall (T0) vergleicht, das im Voraus bestimmt wird, wenn eine Abfrage vom Stellungsregler (2) im Hinblick darauf empfangen wurde, ob PST-Auslösung erlaubt ist oder nicht, und an den Stellungsregler (2) meldet, ob PST-Auslösung erlaubt ist oder nicht.

7. PST-Ausführungsverfahren nach Anspruch 6, ferner umfassend:
einen PST-Auslöseanweisungsschritt, wobei das übergeordnete System (3) eine PST-Auslöseanweisung gemäß einem PST-Zeitplan, der im Voraus festgelegt wird, an den Stellungsregler (2) sendet.

8. PST-Ausführungserfahren nach Anspruch 7, wobei das übergeordnete System (3) im PST-Auslöseverbot-Beurteilungsschritt (S203, S303), wenn die auf einem im Voraus festgelegten Zeitplan basierte PST-Auslösezeitvorgabe erreicht wurde, die verstrichene Zeit ab dem vorherigen PST mit dem PST-Mindestintervall (TO), das im Voraus festgelegt wurde, vergleicht (S308) und, wenn die verstrichene Zeit ab dem vorherigen PST nicht kürzer als das PST-Mindestintervall ist, eine PST-Auslöseanweisung an den Stellungsregler (2) sendet (S309).

9. PST-Ausführungsverfahren nach Anspruch 8, ferner umfassend:
einen Zeitplan-Modifikationsschritt, wobei das übergeordnete System (3) den Zeitplans derart modifiziert, dass die Zeit, zu welcher der vorherige PST abgeschlossen wurde, der Startpunkt für den modifizierten Zeitplan für PSTs ist, falls die PST-Auslösung durch den PST-Auslöseverbot-Beurteilungsschritt (S203, S303) verboten wird, wenn die auf dem Zeitplan basierte PST-Auslösezeitvorgabe erreicht wurde.

## Revendications

1. Système d'instrument de sécurité comprenant :
un positionneur (2) pour commander le degré d'ouverture d'une soupape de détente d'urgence (1) qui est prévue dans un tuyau dans une installation ; et
un système de niveau plus élevé (3) pour commander un test de course partielle, PST, (100-1, 100-2) de la soupape de détente d'urgence (1), dans lequel :
le positionneur (2) comprend :
une partie d'exécution de PST (22) pour exécuter un PST dans la soupape de détente d'urgence (1) en réponse à une instruction de lancement provenant du système de niveau plus élevé (3) ou à une instruction de lancement provenant d'un dispositif d'entrée à l'emplacement de travail où le positionneur (2) est prévu ;
**caractérisé en ce que** le positionneur comprend en outre :
un registre d'horloge (20) pour mesurer le temps écoulé depuis l'achèvement d'un PST sur la soupape de détente d'urgence (1) ; et
une partie d'évaluation d'interdiction de lancement de PST (21) pour évaluer si, oui ou non, un lancement de PST est autorisé, en comparant le temps écoulé depuis le PST précédent à un intervalle minimum de PST (T0) qui est fixé à l'avance, lorsqu'une instruction de lancement de PST a été reçue du système de niveau plus élevé (3) ou du dispositif d'entrée.

2. Système d'instrument de sécurité comprenant :
un positionneur (2) pour commander le degré d'ouverture d'une soupape de détente d'urgence (1) qui est prévue dans un tuyau dans une installation ; et
un système de niveau plus élevé (3) pour commander un PST de la soupape de détente d'urgence (1), dans lequel
le positionneur (2) comprend :
une partie d'interrogation (23) pour interroger le système de niveau plus élevé (3) pour savoir si, oui ou non, un lancement de PST est autorisé, lorsqu'une instruction de lancement de PST a été reçue du dispositif d'entrée dans la zone de travail où le positionneur (2) est prévu ;
une partie d'exécution de PST (22a) pour exécuter un PST dans la soupape de détente d'urgence (1) en réponse à une instruction de lancement provenant du système de niveau plus élevé (3) et pour exécuter un PST dans la soupape de détente d'urgence (1) par une instruction de lancement provenant d'un dispositif d'entrée en réponse à un rapport d'autorisation/d'interdiction de lancement de PST provenant du système de niveau plus élevé (3) ; et
une partie de rapport (24) pour rapporter l'achèvement d'un PST au système de niveau plus élevé (3), dans lequel
le système de niveau plus élevé (3) comprend :
une partie de mémorisation (30) pour mémoriser une planification pour des PST, établie à l'avance ;
une partie d'instruction de lancement de PST (31, 31a) pour envoyer, au positionneur (2), une instruction de lancement de PST à la suite de la planification mémorisée dans la partie de mémorisation (30) ;
un registre d'horloge (33) pour mesurer le temps écoulé depuis l'achèvement d'un PST en réponse à un rapport d'achèvement de PST provenant du positionneur (2) ; et
une partie d'évaluation d'interdiction de lancement de PST (32, 32a) pour comparer le temps écoulé depuis le PST précédent à un intervalle minimum de PST (T0) qui est établi à l'avance, lorsqu'il y a eu une interrogation provenant du positionneur (2) pour savoir si, oui ou non, un lancement de PST est autorisé, et pour rapporter, au positionneur (2), si, oui ou non, un lancement de PST est autorisé.

3. Système d'instrument de sécurité selon la revendication 2, dans lequel la partie d'évaluation d'interdiction de lancement de PST (32, 32a) est en outre conçue, lorsqu'une synchronisation de lancement de PST a été atteinte sur la base de la planification, pour comparer le temps écoulé depuis le PST précédent à l'intervalle minimum de PST (T0) qui a été établi à l'avance, et, si le temps écoulé depuis le PST précédent est supérieur ou égal à l'intervalle minimum de PST, pour ordonner à la partie d'instruction de lancement de PST (31, 31a) d'envoyer une instruction de lancement de PST au positionneur (2).

4. Système d'instrument de sécurité selon la revendication 3, dans lequel :
le système de niveau plus élevé (3) comprend en outre une partie de modification de planification pour modifier la planification de sorte que l'instant auquel le PST précédent a été achevé soit le point de départ pour la planification modifiée pour les PST si, lorsque la synchronisation de lancement de PST a été atteinte sur la base de la planification, le lancement de PST est interdit par la partie d'évaluation d'interdiction de lancement de PST (32, 32a).

5. Procédé d'exécution de PST, comprenant :
une étape de comptage pour compter le temps écoulé depuis l'achèvement d'un PST sur la soupape de détente d'urgence (1) par un positionneur (2) pour commander le degré d'ouverture d'une soupape de détente d'urgence (1) qui est prévue dans un tuyau dans une installation ;
une étape d'évaluation d'interdiction de lancement de PST (S102) pour évaluer si, oui ou non, un lancement de PST est autorisé, en comparant le temps écoulé depuis le PST précédent à un intervalle minimum de PST (T0) qui est établi à l'avance, lorsqu'une instruction de lancement de PST a été reçue par le positionneur (2) à partir d'un système de niveau plus élevé (3) qui gère les PST sur la soupape de détente d'urgence (1) ou à partir d'un dispositif d'entrée sur le sol de l'installation où le positionneur (2) est prévu ; et
une étape d'exécution de PST (S104) à laquelle le positionneur (2) exécute un PST sur la soupape de détente d'urgence (1) lorsqu'un lancement de PST est autorisé.

6. Procédé d'exécution de PST, comprenant :
une étape d'interrogation (S203, S303) pour interroger un système de niveau plus élevé (3) qui gère les PST sur la soupape de détente d'urgence (1) pour savoir si, oui ou non, un lancement de PST est autorisé, lorsque le positionneur (2) qui commande le degré d'ouverture de la soupape de détente d'urgence (1) qui est prévue dans un tuyau dans une installation a reçu une instruction de lancement de PST pour la soupape de détente d'urgence (1) à partir du dispositif d'entrée dans la zone de travail dans laquelle le positionneur (2) est prévu ;
une étape d'exécution de PST (S205, S305) à laquelle le positionneur (2) exécute un PST dans la soupape de détente d'urgence (1) en réponse à une instruction de lancement provenant du système de niveau plus élevé (3) et pour exécuter un PST dans la soupape de détente d'urgence (1) par une instruction de lancement provenant d'un dispositif d'entrée en réponse à un rapport d'autorisation/d'interdiction de lancement de PST provenant du système de niveau plus élevé (3) ;
une étape de rapport (S206, S306) à laquelle le positionneur (2) rapporte l'achèvement d'un PST au système de niveau plus élevé (3) ;
une étape de comptage à laquelle le système de niveau plus élevé (3) mesure le temps écoulé depuis l'achèvement d'un PST en réponse à un rapport d'achèvement de PST provenant du positionneur (2) ; et
une étape d'évaluation d'interdiction de lancement de PST (S203, S303) à laquelle le système de niveau plus élevé (3) compare le temps écoulé depuis le PST précédent à un intervalle minimum de PST (T0) qui est déterminé à l'avance, lorsqu'il y a eu une interrogation provenant du positionneur (2) pour savoir si, oui ou non, un lancement de PST est autorisé, et signale, au positionneur (2), si, oui ou non, un lancement de PST est autorisé.

7. Procédé d'exécution de PST selon la revendication 6, comprenant en outre :
une étape d'instruction de lancement de PST à laquelle le système de niveau plus élevé (3) envoie, au positionneur (2), une instruction de lancement de PST à la suite d'une planification de PST qui est établie à l'avance ;

8. Procédé d'exécution de PST selon la revendication 6 ou 7, dans lequel, à l'étape d'évaluation d'interdiction de lancement de PST (S203, S303), lorsqu'une synchronisation de lancement de PST a été atteinte sur la base d'une planification qui est établie à l'avance, le système de niveau plus élevé (3) compare (S308) le temps écoulé depuis le PST précédent à l'intervalle minimum de PST (T0) qui a été établi à l'avance, et, si le temps écoulé depuis le PST précédent est supérieur ou égal à l'intervalle minimum de PST, envoie (S309) une instruction de lancement de PST au positionneur (2).

9. Procédé d'exécution de PST selon la revendication 8, comprenant en outre :
une étape de modification de planification à laquelle le système de niveau plus élevé (3) modifie la planification de sorte que l'instant auquel le PST précédent a été achevé soit le point de départ pour la planification modifiée pour les PST si, lorsque la synchronisation de lancement de PST a été atteinte sur la base de la planification, le lancement de PST est interdit par l'étape d'évaluation d'interdiction de lancement de PST (S203, S303).
